# EUROPEAN PATENT APPLICATION

(11) **EP 2 910 583 A1**
(43) Date of publication of application: **26.08.2015**
(21) Application number: 13846495.3
(22) Date of filing: 20.09.2013
(51) Int. Cl.: C08F 299/00, B29C 45/14, B32B 27/18, B32B 27/30

(54) **PHOTOCURABLE RESIN COMPOSITION, MULTILAYER SHEET, MOLDED MULTILAYER ARTICLE, AND METHOD FOR PRODUCING MOLDED MULTILAYER ARTICLE**

(30) Priority: 19.10.2012 JP 2012231804
(71) Applicant: Mitsubishi Rayon Co., Ltd., Tokyo 100-8253 (JP)
(72) Inventor: SATOU, Yoshiaki, Otake-shi Hiroshima 739-0693 (JP); ABE, Yoshinori, Tokyo 100-8253 (JP); FUJIMOTO, Noriko, Otake-shi Hiroshima 739-0693 (JP)
(74) Representative: TBK
(86) International application number: PCT/JP2013/075578
(87) International publication number: WO 2014/061402

(57) **Abstract**

To provide: a multilayer sheet and the like, which can provide a molded multilayer article that has excellent appearance and the like, while exhibiting excellent wear resistance and the like; a molded multilayer article using the multilayer sheet and the like; and a method for producing a molded multilayer article. A photocurable resin composition for surface protective layers of multilayer sheets, which contains (A) a thermoplastic resin that has a radically polymerizable unsaturated group in a side chain, (B) a high molecular weight hindered amine light stabilizer that has a number average molecular weight of 1,000 to 50,000, and (C) a photo-polymerization initiator.

## Description

### TECHNICAL FIELD

The present invention relates to a photocurable resin composition, a multilayer sheet, a molded multilayer article, and a method for producing the molded multilayer article. More particularly, the invention relates to a multilayer sheet, which has excellent appearance, designing property, chemical resistance, wear resistance, and weatherability, but does not have surface adhesion, a molded multilayer article using the sheet, and a method for producing the molded multilayer article.

### BACKGROUND ART

As a method of molding a plastic product and decorating the surface thereof at the same time, a photocurable sheet using a photocurable resin composition including an acrylic resin having a radically polymerizable unsaturated group at the side chain thereof has been suggested (for example, Patent Document 1).

The photocurable resin composition or photocurable sheet has both of excellent moldability before being photocured and excellent surface performance (hardness, scratch resistance, wear resistance, weatherability, chemical resistance, adhesion, and the like) after being photocured, and thus, is very suitably used as an automotive interior use. However, for example, as an exterior use of an automotive, which is directly exposed to sunlight at extremely high degree, for example, the upside part of a sunroof or a rear spoiler, in some cases, there have been the problems in that the layer of a photocurable resin composition is discolored, causes cracks, or is peeled from a base material sheet.

In addition, in order to solve these problems, a photocurable sheet using a photocurable resin composition including an ultraviolet ray absorbent and a hindered amine-based light stabilizer has been suggested (for example, Patent Document 2). The photocurable resin composition or photocurable sheet is very suitably used as a use that requires weatherability.

### CITATION LIST

### PATENT DOCUMENT

Patent Document 1: JP 2002-79621 A
Patent Document 2: JP 2004-277725 A

### DISLOSURE OF THE INVENTION

### PROBLEM TO BE SOLVED BY THE INVENTION

However, recently, with increasing requirement performance on both performances of weatherability and wear resistance, when weatherability is attempted to be improved by increasing the added amounts of an ultraviolet ray absorbent and a hindered amine-based light stabilizer, it is confirmed that there may be a problem in that wear resistance is decreased according to the added amounts thereof

An object of the invention is to provide a photocurable resin composition capable of obtaining a molded multilayer article that has excellent appearance, designing property, chemical resistance, wear resistance, and long-term weatherability, and also excellent wear resistance, while the layer surface of the photocurable resin composition does not have adhesion; a multilayer sheet; a molded multilayer article using the same; and a method for producing the molded multilayer article.

### MEANS FOR SOLVING PROBLEM

The present inventors enthusiastically researched in order to solve the above object, and as a result, they found that when a high molecular weight hindered amine-based light stabilizer (B) is used among various ultraviolet ray absorbents and hindered amine-based light stabilizers, weatherability is improved and also wear resistance does not decrease. In addition, they found that when a high molecular weight hindered amine-based light stabilizer having a triazine backbone is used, weatherability is improved and wear resistance is also improved.

The embodiments of the invention are as follows.
[1]: A photocurable resin composition for a multilayer sheet surface protective layer, the photocurable resin composition including a thermoplastic resin (A) having a radically polymerizable unsaturated group at a side chain thereof, a high molecular weight hindered amine-based light stabilizer (B) having a number average molecular weight of 1,000 to 50,000, and a photo-polymerization initiator (C).
[2]: The photocurable resin composition disclosed in [1], in which the difference between the haze values before and after the wear resistance test (based on JIS R3212) of the photocurable resin composition after being cured is 7% or less.
[3]: The photocurable resin composition disclosed in [1] or [2], in which the high molecular weight hindered amine-based light stabilizer (B) has a triazine backbone.
[4]: The photocurable resin composition disclosed in any one of [1] to [3], in which the photocurable resin composition further includes inorganic fine particles (D).
[5]: The photocurable resin composition disclosed in [4], in which the inorganic fine particles (D) are colloidal silica.
[6]: The photocurable resin composition disclosed in [4] or [5], in which the amount of the inorganic fine particles (D) is 5 to 400 parts by mass with respect to 100 parts by mass of the thermoplastic resin (A) having a radically polymerizable unsaturated group at the side chain thereof
[7]: The photocurable resin composition disclosed in [6], in which the amount of the inorganic fine particles (D) is 100 to 200 parts by mass and the amount of the high molecular weight hindered amine-based light stabilizer (B) is 2 to 5 parts by mass, with respect to 100 parts by weight of the thermoplastic resin (A) having a radically polymerizable unsaturated group at the side chain thereof
[8]: The photocurable resin composition disclosed in [1] to [7], in which the radically polymerizable unsaturated group is a (meth)acryloyl group.
[9]: The photocurable resin composition disclosed in any one of [1] to [8], in which the thermoplastic resin (A) having a radically polymerizable unsaturated group at a side chain thereof is a thermoplastic resin prepared by adding a compound having a carboxyl group and a (meth)acryloyl group to a copolymer of (meth)acrylate having an epoxy group and a monomer capable of being copolymerized with the (meth)acrylate.
[10]: The photocurable resin composition disclosed in any one of [1] to [9], in which the photocurable resin composition is a photocurable resin composition that does not substantially include an organic compound having a radically polymerizable unsaturated group other than the thermoplastic resin (A) having a radically polymerizable unsaturated group at the side chain thereof.
[11]: A multilayer sheet prepared by laminating the photocurable resin composition disclosed in any one of [1] to [10] on a base material sheet to be a thickness of 1 to 15 µm.
[12]: The multilayer sheet disclosed in [11], in which the base material sheet is a thermoplastic acrylic resin sheet or a polyester-based resin sheet, each of which has a crosslinkable rubber component.
[13]: A molded multilayer article manufactured by laminating a cured material of the multilayer sheet disclosed in [11] or [12] on a molded article, in which the layer laminated with the photocurable resin composition of the multilayer sheet is laminated to be an outermost layer.
[14]: The molded multilayer article disclosed in [13], in which a difference between the haze values before and after the wear resistance test (based on JIS R3212) of the cured material is 7% or less.

### EFFECT OF THE INVENTION

The cured material of the photocurable resin composition related to the embodiment of the invention exhibits excellent effects, and for example, it has excellent appearance, designing property, chemical resistance, wear resistance, and long-term weatherability, but does not have surface adhesion.

### MODE(S) FOR CARRYING OUT THE INVENTION

Hereinafter, the embodiments of the invention will be described in detail, but the range of the invention is not limited to these descriptions and in addition to these following examples, the invention may be properly modified and performed within the range that does not hinder the object of the invention.

### Thermoplastic resin (A) having radically polymerizable unsaturated group at side chain

In the embodiment of the invention, examples of the thermoplastic resin (A) having a radically polymerizable unsaturated group at a side chain may include a polymer prepared by introducing a radically polymerizable unsaturated group to a polymer prepared by homo-polymerizing or co-polymerizing a monomer.

Examples of the monomer may include a monomer having a hydroxyl group, such as, N-methylol acrylamide, 2-hydroxyethyl (meth)acrylate, 2-hydroxypropyl (meth)acrylate, 2-hydroxybutyl (meth)acrylate, and 2-hydroxy-3-phenoxypropyl (meth)acrylate, a monomer having a carboxyl group, such as, a (meth)acrylic acid, and acryloyloxyethyl monosuccinate, a monomer having an epoxy group, such as, glycidyl (meth)acrylate, and 3,4-epoxycyclohexylmethyl (meth)acrylate, a monomer having an aziridinyl group, such as, 2-aziridinyl ethyl(meth)acrylate, and 2-aziridinyl propionate allyl, a monomer having an amino group, such as, (meth)acrylamide, diacetone acrylamide, dimethylaminoethyl (meth)acrylate, and diethylaminoethyl (meth)acrylate, a monomer having a sulfonic group, such as, 2-acrylamide-2-methyl propane sulfonic acid, the adduct of a radically polymerizable monomer having diisocyanate and active hydrogen, such as, an equimolar adduct of 2,4-toluene diisocyanate and 2-hydroxyethyl acrylate, and a monomer having an isocyanate group, such as, 2-isocyanateethyl(meth)acrylate. They may be used either singly or in combination of two or more kinds thereof.

In addition, in order to control a glass transition temperature (Tg) of the polymer prepared by homo-polymerizing or co-polymerizing these monomers or control the physical properties of a multilayer sheet, the monomers capable of being co-polymerized with these monomers may be further co-polymerized.

Examples of the monomers capable of being co-polymerized may include (meth)acrylates, such as, methyl (meth)acrylate, tricyclodecanyl (meth)acrylate, and isobornyl (meth)acrylate, an imide derivative, such as, N-phenylmaleimide, cyclohexylmaleimide, and N-butylmaleimide, an olefin-based monomer, such as, butadiene, and an aromatic vinyl compound, such as, styrene and α-methyl styrene. They may be used either singly or in combination of two or more kinds thereof.

Next, for example, a radically polymerizable unsaturated group may be introduced to the polymer prepared by homo-polymerizing or co-polymerizing the monomers according to the following method.

In the case of a homo-polymer or co-polymer of the monomers having a hydroxyl group, the monomers having a carboxyl group or a sulfonic group may be subjected to a condensation reaction, or the monomers having an epoxy group, an aziridinyl group, and an isocyanate group or a diisocyanate compound and an equimolar adduct of a hydroxyl group-containing acrylic acid ester monomer may be subjected to an addition reaction. In the case of a homo-polymer or co-polymer having at least one functional group selected from the monomers having a carboxyl group or a sulfonic group, the monomers having a hydroxyl group may be subjected to a condensation reaction. In the case of a mono-polymer or co-polymer having at least one functional group selected from the monomers having an epoxy group, an isocyanate group, or an aziridinyl group, the monomers having a hydroxyl group or a carboxyl group may be subjected to an addition reaction. In the case of a homo-polymer or co-polymer of the monomers having a carboxyl group, the monomers having an epoxy group, an aziridinyl group, and an isocyanate group or a diisocyanate compound and an equimolar adduct of the hydroxyl group-containing acrylic acid ester monomer may be subjected to an addition reaction. These reactions may be preferably performed while adding a small amount of a polymerization inhibitor, such as, hydroquinone and sending dry air.

As the thermoplastic resin (A) having a radically polymerizable unsaturated group at a side chain, the compound having both of a carboxyl group and a (meth)acryloyl group in one molecule may be preferably added to the co-polymer of (meth)acrylate having an epoxy group and the monomers capable of being copolymerized with the (meth)acrylate. Among them, a (meth)acrylic acid may be preferably added to the co-polymer of glycidyl (meth)acrylate and the monomer capable of being co-polymerized with the glycidiyl (meth)acrylate. Especially, among the co-polymers, the co-polymers having 5 to 30 mol% of the unit derived from glycidyl (meth)acrylate are preferred, the co-polymers including (meth)acrylate as a copolymerization component is preferred, and among them, the co-polymers including methyl methacrylate is preferred. The compound having both of a carboxyl group and a (meth)acryloyl group in one molecule may be added preferably in the mole equivalent of 0.5 to 1, and more preferably in the mole equivalent of 0.9 to 1, with respect to an epoxy group.

A polymerization method of the polymer prepared by homo-polymerizing or co-polymerizing these monomers may be a solution polymerization method, an emulsion polymerization method, and a suspension polymerization method. In addition, in the case where a radically polymerizable unsaturated group is introduced into a polymer prepared by homo-polymerizing or co-polymerizing these monomers, for example, a thermoplastic resin (A) having a radically polymerizable unsaturated group at a side chain may be obtained by performing the condensation reaction or addition reaction using the solution prepared by dissolving the polymer prepared by homo-polymerizing or co-polymerizing these monomers in an organic solvent.

For the amount of the radically polymerizable unsaturated group at a side chain in the thermoplastic resin (A) having the radically polymerizable unsaturated group at the side chain, a double bond equivalent (the resin amount per 1 mol of an unsaturated group) may be preferably 1 to 3000 g/mol as a calculated value in terms of the improvements of scratch resistance and wear resistance. The double bond equivalent is more preferably 100 to 1200 g/mol and still more preferably 500 to 1000 g/mol. As described above, by introducing the plural radically polymerizable unsaturated groups being involved in crosslinking, the curable physical properties may be effectively improved. In addition, the method for calculating a double bond equivalent will be described below.

The number average molecular weight (Mn) of the thermoplastic resin (A) having a radically polymerizable unsaturated group at a side chain is preferably 5,000 to 2,500,000, and more preferably 10,000 to 1,000,000. When the Mn is 5,000 or more, at the time of insert-molding a multilayer sheet laminated with the layer of a photocurable resin composition described below, even if a pre-heating is performed at the time of being molded, it is difficult to attach the multilayer sheet to a mold for molding. In addition, the surface hardness of a molded multilayer article to be prepared becomes appropriate. Meanwhile, when the Mn is 2,500,000 or less, it is easy to be composited, and the appearance and adhesion to a base material sheet become good. In addition, the method of measuring the Mn will be described below.

A glass transition temperature (Tg) of the thermoplastic resin (A) having a radically polymerizable unsaturated group at a side chain is preferably 25 to 175°C, and more preferably 30 to 150°C. When the Tg is 25°C or higher, at the time of being insert-molded, the mold peeling property of the multilayer sheet becomes good, and the surface hardness of the molded multilayer article becomes appropriate. Meanwhile, when the Tg is 175°C or lower, the handling property of the multilayer sheet becomes good. In addition, in consideration of the Tg of the thermoplastic resin (A) having a radically polymerizable unsaturated group at a side chain, it is preferable to use a vinyl polymerizable monomer having high Tg in the case of using a homo-polymer as a monomer. In addition, in terms of weatherability, it is more preferable to use (meth)acrylates as a main component for the vinyl polymerizable monomer. In addition, the method of measuring Tg will be described below.

In addition, as will be described below, when inorganic fine particles (D) are added to a photocurable resin composition, by using a vinyl polymerizable monomer having a functional group in a molecule, in which the functional group may be reacted with a functional group (a hydroxyl group, a carboxyl group, a silanol group, and the like) on the surface of the inorganic fine particles (D), as a monomer, the physical properties, such as, rigidity, toughness, and thermal resistance of a photocurable resin composition may be improved.

Examples of the functional group capable of being reacted with a functional group on the surface of the inorganic fine particles (D) may include at least one functional group selected from the group consisting of a hydroxyl group, a carboxyl group, a halogenation silyl group, and an alkoxysilyl group. Examples of these vinyl polymerizable monomers may include 2-hydroxyethyl (meta)acrylate, 2-hydroxypropyl (meth)acrylate, (meth)acrylic acid, vinyltrichlorosilane, vinyl trimethoxysilane, γ-(meth)acryloyloxypropyltrimethoxysilane, and γ-(meth)acryloxypropyldimethoxymethylsilane. They may be used either singly or in combination of two or more kinds thereof.

In addition, "(meth)acrylate", "(meth)acrylic," and "(meth)acryloyl" refers to "acrylate" or "methacrylate", "acrylic" or "methacryl", and "acryloyl" or "methacryloyl", respectively.

### High molecular weight hindered amine-based light stabilizer (B) having number average molecular weight of 1,000 to 50,000

In the embodiment of the invention, examples of a high molecular weight hindered amine-based light stabilizer (B) having a number average molecular weight of 1,000 to 50,000 may include a compound having a piperidine ring, in which a plurality of substituents exhibiting a steric hindrance action are bound to two carbon atoms adjacent with a nitrogen atom in a chemical structure. Examples of the substituents exhibiting a steric hindrance action may include a methyl group.

The number average molecular weight of the high molecular weight hindered amine-based light stabilizer (B) is preferably 1,000 to 50,000, more preferably 1,500 to 30,000, and still more preferably 2,000 to 10,000. When the number average molecular weight is 1,000 or more, the wear resistance of the photocurable resin composition tends to be good. Meanwhile, when the number average molecular weight is 50,000 or less, the transparency of the photocurable resin composition tends to be good.

As the high molecular weight hindered amine-based light stabilizer (B), the known compounds may be used, and is not particularly limited. For example, there may be a compound having a 2,2,6,6-tetramethyl-4-piperidyl group, a compound having a 1,2,2,6,6-pentamethyl-4-piperidyl group, and the like. Among them, in terms of wear resistance, a high molecular weight hindered amine-based light stabilizer having a triazine backbone is preferred.

Examples of the commercially available products may include a polycondensate of dimethyl succinate and 4-hydroxy-2,2,6,6-tetramethyl-1-piperidineethanol (for example, Trade Name: Tinuvin (Trademark) 622 LD, Tinuvin (Trademark) 622 SF, manufactured by BASF Japan Ltd.), a copolymer of olefin (C20 to C24) · maleic anhydride · 4-amino-2,2,6,6-tetramethylpiperidine (for example, Trade Name: Uvinul (Trademark) 5050 H, manufactured by BASF Japan Ltd.), ADK STAB (Trademark) LA-63 P, LA-68 (the above names are Trade Name, manufactured by ADEKA CORPORATION), and the like.

Examples of the commercially available high molecular weight hindered amine-based light stabilizer having a triazine backbone may include N,N',N",N"'-tetrakis-(4,6-bis-(butyl-(N-methyl-2,2,6,6-tetramethylpiperidin 4-yl)amino)-triazine 2-yl)-4,7-diazadecane-1,10-diamine (for example, Trade Name: Chimassorb (Trademark) 119 FL, Trade Name: Tinuvin (Trademark) 111 FDL as a mixture, manufactured by BASF Japan Ltd.), a polycondensate of dibutylamine 1,3,5-triazine · N,N'-bis(2,2,6,6-tetramethyl-4-piperidyl 1,6-hexamethylenediamine and N-(2,2,6,6-tetramethyl-4-piperidyl) butylamine (for example, Trade Name: Chimassorb (Trademark) 2020 FDL, manufactured by BASF Japan Ltd.), Poly[{6-(1,1,3,3-tetramethyl butyl)amino-1,3,5-triazine 2, 4-diyl} {(2,2,6,6-tetramethyl-4-piperidyl)imino}hexamethylene{(2,2,6,6-tetramethyl-4-piperidyl)imino}] (for example, Trade Name: Chimassorb (Trademark) 944 FDL, as a mixture, Trade Name: Tinuvin (Trademark) 783 FDL and Tinuvin (Trademark) 791 FB, manufactured by BASF Japan Ltd.), peroxide-treated 4-butylamino-2,2,6,6-tetramethylpiperidin and 2,4,6-trichloro-1,3,5-triazine, a reaction product of cyclohexane and N,N'-ethane-1,2-diyl bis(1,3-propanediamine) (for example, Trade Name: Flamestab (Trademark) NOR 116 FF, manufactured by BASF Japan Ltd.), a 2,4-dichloro-6-(1,1,3,3-tetramethyl butylamino)-1,3,5-triazine · N,N'-bis(2,2,6,6-tetramethyl-4-piperidyl)hexamethylenediamine polycondensate, (for example, Trade Name: ADK STAB (Trademark) LA-94 G, manufactured by ADEKA CORPORATION), and the like. They may be used either singly or in combination of two or more kinds thereof. Of course, the high molecular weight hindered amine-based light stabilizer (B) is not limited to these compounds.

The content of the high molecular weight hindered amine-based light stabilizer (B) is preferably 0.1 to 15 parts by mass, more preferably 0.2 to 10 parts by mass, still more preferably 0.3 to 5 parts by mass, and most preferably 0.8 to 4 parts by mass, with respect to 100 parts by mass of the thermoplastic resin (A) having a radically polymerizable unsaturated group at a side chain. When the content of the high molecular weight hindered amine-based light stabilizer (B) is 0.1 part by mass or more, the weatherability of the photocurable resin composition tends to be improved, and also, the wear resistance thereof tends to be good. In addition, when the content of the high molecular weight hindered amine-based light stabilizer (B) is 15 parts by mass or less, in terms of the transparency of the photocurable resin composition or mold staining resistance when performing a heat-molding in order to obtain a molded multilayer article, they tend to be good.

Since the weatherability of the photocurable resin composition decreases according to an increase in the content of the inorganic fine particles (D) described below, it is preferable to increase the content of the high molecular weight hindered amine-based light stabilizer (B) according to an increase in the content of the inorganic fine particles (D). When the inorganic fine particles (D) is included in the amount of 100 parts by mass or more with respect to 100 parts by mass of the thermoplastic resin (A) having a radically polymerizable unsaturated group at a side chain, the content of the high molecular weight hindered amine-based light stabilizer (B) is preferably 0.8 to 5 parts by mass, and more preferably 0.8 to 4 parts by mass. When the content of the high molecular weight hindered amine-based light stabilizer (B) is 0.8 part by mass or more, it is possible to inhibit the decrease of weatherability according to the content of the inorganic fine particles (D).

A method of adding a high molecular weight hindered amine-based light stabilizer (B) to the thermoplastic resin (A) having a radically polymerizable unsaturated group at a side chain is not particularly limited. For example, the method may be arbitrarily selected, and there may be a method including polymerizing a thermoplastic resin (A) having a radically polymerizable unsaturated group at a side chain, in advance, and then, mixing a high molecular weight hindered amine-based light stabilizer (B), and also, a method including polymerizing the monomers under the condition of mixing the monomer constituting the thermoplastic resin (A) having a radically polymerizable unsaturated group at a side chain and a high molecular weight hindered amine-based light stabilizer (B).

### Photo-polymerization initiator (C)

In the embodiment of the invention, examples of the photo-polymerization initiator (C) may include a photo-radical polymerization initiator that generates radical by irradiating active energy rays, such as, an electron beam, ultraviolet rays, or visible rays.

A photo-radical polymerization initiator is not particularly limited, but the known compounds may be used. In consideration of xanthochromic property at the time of being photo-cured and the deterioration at the time of being exposed to weather, the compounds not including an amine group in a molecular, such as, an acetophenone-based, benzophenone-based, and acylphosphine oxide-based compound are preferred. For example, there may be 1-(4-dodecylphenyl)-2-hydroxy-2-methylpropane-1-one, 1-hydroxy-cyclohexyl-phenyl-ketone, 2-hydroxy-2-methyl-1-phenyl-propan-1-one, 1-(4-isopropylphenyl)-2-hydroxy-2-methylpropane-1-one, bis(2,4 6-trimethylbenzoyl)-phenylphosphine oxide, bis(2,6-dimethoxybenzoyl)-2,4,4-trimethyl-pentylphosphine oxide, and the like. They may be used either singly or in combination of two or more kinds thereof.

Among these compounds, in the embodiment of the invention described below, the temperature of the compound becomes temporarily the temperature that is higher than the boiling point of the compound according to the temperature conditions of the method of producing a molded multilayer article in some cases, and thus, it is preferable to use the compound having higher boiling point than the temperature condition at the time of producing a molded multilayer article.

The content of the photo-polymerization initiator (C) is preferably 0.1 to 5 parts by mass with respect to 100 parts by mass of the thermoplastic resin (A) having a radically polymerizable unsaturated group at a side chain because the remaining amount after being cured affects weatherability. In addition, when an amino-based photo-radical polymerization initiator that is involved in the xanthochromic property the time of being cured is used as a photo-polymerization initiator (C), 1 part by mass or less is preferred.

A method of adding a photo-polymerization initiator (C) to a thermoplastic resin (A) having a radically polymerizable unsaturated group at a side chain is not particularly limited. For example, the method may be arbitrarily selected, and there may be a method including polymerizing a thermoplastic resin (A) having a radically polymerizable unsaturated group at a side chain, in advance, and then, mixing a photo-polymerization initiator (C), and also, a method including polymerizing the monomers under the condition of mixing the monomer constituting the thermoplastic resin (A) having a radically polymerizable unsaturated group at a side chain and a photo-polymerization initiator (C).

### Photocurable resin composition

In the embodiment of the invention, the photocurable resin composition may include a thermoplastic resin (A) having a radically polymerizable unsaturated group at a side chain, a high molecular weight hindered amine-based light stabilizer (B) having a number average molecular weight of 1,000 to 50,000, and a photo-polymerization initiator (C). In addition, it may include inorganic fine particles (D).

The photocurable resin composition is cured by light to form a surface protective layer, and thus, has the function on protecting a base material sheet or a multilayer sheet. For the photocurable composition after being cured, the difference between the haze values before and after a wear resistance test, that is, the haze value after the test - the haze value before the test, is preferably 0 to 7%, and more preferably 0.1 to 5%.

The photocurable resin composition may include, if necessary, various additives, such as, a sensitizer, an ultraviolet ray absorbent, a low molecular weight hindered amine-based light stabilizer (E) having a number average molecular weight of less than 1000, a resin for denaturalization, dye, pigment, a leveling agent, a cissing inhibitor, an oxidation stabilizer, and an oxygen inhibition inhibitor without departing from the scope of the invention. The contents of various additives are preferably 0 to 15 parts by mass, more preferably 0 to 10 parts by mass, and still more preferably 0 to 5 parts by mass, with respect to 100 parts by mass of a thermoplastic resin (A) having a radically polymerizable unsaturated group at a side chain.

By adding a sensitizer, the curing reaction of the photocurable resin composition tends to be accelerated. Examples of the sensitizer may include benzophenone, benzoinisopropylether, and thioxanthone. They may be used either singly or in combination of two or more kinds thereof.

By combining an ultraviolet ray absorbent, and then, converting ultraviolet rays into thermal energy through absorbing the ultraviolet rays, the deteriorations of a molded multilayer article, such as, discoloration, fading, and a decrease in physical properties, tend to be inhibited, in which the molded multilayer article may be obtained by inhibiting a photochemical reaction or photo-excitation of a chromophore in a photocurable resin composition layer, a base material sheet, a decorative layer, an adhesive layer, or a resin layer.

As the ultraviolet ray absorbent, both of an organic-based ultraviolet ray absorbent and an inorganic-based ultraviolet ray absorbent may be used. Examples of the organic-based ultraviolet ray absorbent may include a benzotriazole-based ultraviolet ray absorbent, a benzophenone-based ultraviolet ray absorbent, a benzoate-based ultraviolet ray absorbent, a cyanoacrylate-based ultraviolet ray absorbent, and a triazine-based ultraviolet ray absorbent. Examples of the inorganic-based ultraviolet ray absorbent may include an inorganic compound, such as, zinc oxide, cerium oxide, and titanium oxide, which are in a fine particle shape having a particle diameter of 0.2 µm. They may be used either singly or in combination of two or more kinds thereof.

In addition, when using an ultraviolet ray absorbent, the absorption wavelength area of the ultraviolet ray absorbent and the absorption wavelength area of a photo-polymerization initiator (C) may be overlapped. In this case, the curing property of the photocurable resin composition and the weatherability and wear resistance of the cured product of the photocurable resin composition may be decreased, and thus, it is preferable that the absorption wavelength area of the ultraviolet ray absorbent and the absorption wavelength area of the photo-polymerization initiator (C) are not overlapped. Among the ultraviolet ray absorbents, the organic-based ultraviolet ray absorbents are preferred in terms of the transparency of the cured product of the photocurable resin composition.

Examples of a low molecular weight hindered amine-based light stabilizer (E) may include a compound having a piperidine ring, in which a plurality of substituents exhibiting a steric hindrance action are bound to two carbon atoms adjacent with a nitrogen atom in a chemical structure. Examples of the substituents exhibiting a steric hindrance action may include a methyl group. As a low molecular weight hindered amine-based light stabilizer (E), the known compounds may be used, and are not particularly limited. Examples thereof may include a compound having 2,2,6,6-tetramethyl-4-piperidyl group and a compound having 1,2,2,6,6-pentamethyl-4-piperidyl group.

Examples of the commercially available compounds may include Uvinul (Trademark) 4050 FF, Tinuvin (Trademark) 144, Tinuvin (Trademark) PA144, Tinuvin (Trademark) 765, Tinuvin (Trademark) 770 DF, Tinuvin (Trademark) 123, Tinuvin (Trademark) 292, Sanol (Trademark) LS-2626 (the above names are Trade Names, manufactured by BASF Japan Ltd.), ADK STAB (Trademark) LA-52, LA-57, LA-72, LA-77 Y, LA-77 G, LA-81, LA-82, LA-87 (the above names are Trade Names, manufactured by ADEKA CORPORATION), and the like. They may be used either singly or in combination of two or more kinds thereof.

In addition, when using the low molecular weight hindered amine-based light stabilizer (E) having a number average molecular weight of less than 1000, in the case of planning the improvement of weatherability by increasing the content thereof, the wear resistance tends to be decreased according to the increase in the content thereof, and thus, the content that does not hinder the wear resistance is preferred, and is preferably 0 to 5 parts by mass, more preferably 0.5 to 3 parts by mass, and still more preferably 0.5 to 2 parts by mass, with respect to 100 parts by mass of a thermoplastic resin (A) having a radically polymerizable unsaturated group at a side chain.

The weatherability of the photocurable resin composition is decreased according to the content of inorganic fine particles (D) described below, and thus, the content of the low molecular weight hindered amine-based light stabilizer (E) is preferably increased according to the increase in the content of the inorganic fine particles (D). When the inorganic fine particles (D) is included in the amount of 100 parts by mass with respect to 100 parts by mass of the thermoplastic resin (A) having a radically polymerizable unsaturated group at a side chain, the high molecular weight hindered amine-based light stabilizer (B) and the low molecular weight hindered amine-based light stabilizer (E) are preferably used together. The total content of the high molecular weight hindered amine-based light stabilizer (B) and the low molecular weight hindered amine-based light stabilizer (E) is preferably 2 to 10 parts by mass and more preferably 2.5 to 5 parts by mass with respect to 100 parts by mass of the thermoplastic resin (A).

In addition, when using a hindered amine-based light stabilizer having a radically polymerizable unsaturated group at a side chain, the decrease in wear resistance tends to be inhibited according to the added amount thereof.

In the embodiment of the invention described below, when the temperature of the photocurable resin composition layer is high when producing a molded multilayer article, an oxygen inhibition inhibitor, such as, n-methyldiethanolamine may be added to make the surface hardness of the photocurable resin composition layer to be good.

In addition, when curing the photocurable resin composition, if necessary, the photo-curing by a photo-polymerization initiator (C) and also a heat-curing by a thermal polymerization initiator using heat when producing a molded multilayer article may be used together. The content of the thermal polymerization initiator is preferably 0.1 to 5 parts by mass with respect to 100 parts by mass of the thermoplastic resin (A) having a radically polymerizable unsaturated group at a side chain, because the remained amount after being cured may affect weatherability.

A thermal polymerization initiator that is used when the heat-curing is used together may be various peroxides. When the heat-curing is used together by the thermal polymerization initiator, the curing is preferably performed at 150°C for 30 seconds, and thus, as the peroxides, the peroxide having a low critical temperature, for example, lauroyl peroxide, t-butylperoxy-2-ethylhexanoate and 1,1-bis(t-butylperoxy)-3,3,5-trimethyl cyclohexane, is preferred. They may be used either singly or in combination of two or more kinds thereof

A method for combining various additives to the thermoplastic resin (A) having a radically polymerizable unsaturated group at a side chain may be the same method as the case of inorganic fine particles (D) described below. In addition, a method including polymerizing the thermoplastic resin (A) having a radically polymerizable unsaturated group at a side chain, and then, combining various additives described above is preferred because the method does not hinder the polymerization of the thermoplastic resin (A) having a radically polymerizable unsaturated group at a side chain.

The photocurable resin composition may include an organic compound having a radically polymerizable unsaturated group other than the thermoplastic resin (A) having a radically polymerizable unsaturated group at a side chain, if necessary, without departing from the scope of the invention.

The organic compound having a radically polymerizable unsaturated group other than the thermoplastic resin (A) having a radically polymerizable unsaturated group at a side chain may be preferably a cross-linkable monomer or oligomer having a molecular weight of 2,000 or more, and a solid cross-linkable monomer or oligomer that is preferably at 60°C or lower, more preferably at 50°C or lower, and still more preferably at 40°C lower in terms of the preservative stability of the photocurable resin composition, adhesion for obtaining a molded multilayer article during production, printing process transmission, and mold staining resistance.

Examples of the crosslinkable monomers may include difunctional (meth)acrylic ester, such as, tripropylene glycol di(meth)acrylate, 1,6-hexanediol diacrylate, and tetraethylene glycol di(meth)acrylate, trifunctional (meth)acrylic ester, such as, trimethylolpropane tri(meth)acrylate and pentaerythritol tri(meth)acrylate, tetrafunctional (meth)acrylic ester, such as, tetramethylolmethane tetra(meth)acrylate and pentaerythritol tetra(meth)acrylate, and hexafunctional (meth)acrylic ester, such as, dipentaerythritol hexa-acrylate.

Examples of the crosslinkable oligomers may include polyester(meth)acrylate, polyether(meth)acrylate, polyurethane(meth)acrylate, epoxy(meth)acrylate, and silicone(meth)acrylate. In detail, they may include polyethylene glycol di(meth)acrylate, polypropylene glycol di(meth)acrylate, bisphenol A-type epoxy acrylate, diacrylate of polyurethane, cresol novolac type epoxy(meth)acrylate, and the like. They may be used either singly or in combination of two or more kinds thereof

When the photocurable resin composition is laminated on a base material sheet described below, the thickness of the photocurable resin composition is preferably in the range of 1 to 15 µm and more preferably in the range of 2 to 10 µm. When the thickness of the photocurable resin composition is less than 1 µm, even though the photocruable resin composition is cured, in some cases, the properties, such as, scratch resistance, wear resistance and chemical resistance may not be obtained. In addition, when the thickness of the photocurable resin composition is greater than 15 µm, the long-term weatherability may be significantly decreased in the curing method that is likely to cause an internal distortion, for example, a photo curing by an electron beam, ultraviolet rays, or visible rays.

### Inorganic fine particles (D)

In addition, the photocurable resin composition preferably includes the inorganic fine particles (D) in terms of improving scratch resistance and wear resistance. A kind, a particle diameter, and a shape of the inorganic fine particles (D) are not particularly limited as long as the transparency of the cured product of the photocurable resin composition is secured.

Examples of the inorganic fine particles (D) may include colloidal silica, alumina, titanium oxide, tin oxide, heteroelement-doped tin oxide (ATO, and the like), indium oxide, heteroelement-doped indium oxide (ITO, and the like), cadmium oxide, antimony oxide, and the like. They may be used either singly or in combination of two or more kinds thereof. Among then, colloidal silica is preferred in terms of the ease of acquisition, costs, and the exhibition of the transparency or wear resistance of the cured product of the photocurable resin composition.

The colloidal silica may be used in a form of a general water-soluble dispersion and a form of dispersing it in an organic solvent. However, in order to disperse it uniformly and stably in a photocurable resin composition, the colloidal silica dispersed in an organic solvent is preferably used.

Examples of the organic solvent may include methanol, isopropyl alcohol, n-butanol, ethylene glycol, xylene/butanol, ethyl cellosolve, butyl cellosolve, dimethylformamide, dimethylacetamide, methyl ethyl ketone, methyl iso butyl ketone, or toluene. They may be used either singly or in combination of two or more kinds thereof. Among them, in terms of being uniformly dispersed in the photocurable resin composition, the organic solvents capable of dissolving the thermoplastic resin (A) having a radically polymerizable unsaturated group at a side chain are preferably selected.

Examples of the colloidal silica that is in a form of being dispersed in an organic solvent may include a methanol silica sol, an isopropyl alcohol silica sol IPA-ST, a n-butanol silica sol NBA-ST, an ethylene glycol silica sol EG-ST6, a xylene/butanol silica sol XBA-ST, an ethyl cellosolve silica sol ETC-ST, a butyl cellosolve silica sol BTC-ST, a dimethylformamide silica sol DBF-ST, a dimethylacetamide silica sol DMAC-ST, a methyl ethyl ketone silica sol MEK-ST, a methyl isobutyl ketone silica sol MIBK-ST (the above names are Trade Names, manufactured by NISSAN Chemical Industries, Ltd.), and the like. They may be used either singly or in combination of two or more kinds thereof.

The particle diameter of the inorganic fine particle (D) is preferably 200 nm or less, more preferably 100 nm or less, and still more preferably 50 nm or less, in terms of the transparency of the cured product of the photocurable resin composition. In addition, the lower limit of the particle diameter of the inorganic fine particle (D) is preferably 1 nm or more. In addition, the particle diameter of the inorganic fine particle (D) is defined as the mean value by observing the cross-section of the cured product of the photocurable resin composition including the inorganic fine particles (D) through a TEM photograph.

The added amount of the inorganic fine particles (D) is preferably 5 to 400 parts by mass, more preferably 10 to 300 parts by mass, still more preferably 10 to 200 parts by mass, most preferably 50 to 200 parts by mass, still most preferably 80 to 200 parts by mass, and further still most preferably 100 to 200 parts by mass, in an inorganic fine particle solid with respect to 100 parts by mass of the thermoplastic resin (A) having a radically polymerizable unsaturated group at a side chain. When the added amount of the inorganic fine particles (D) is 5 parts by mass or more, the effect thereof on improving wear resistance is accepted. Meanwhile, when the added amount of the inorganic fine particles (D) is 400 parts by mass or less, the preservative stability of the photocurable resin composition is high, and the moldability of a multilayer sheet described below is high.

In addition, the inorganic fine particles, of which the surfaces thereof are treated in advance with a silane compound represented by the following Formula (I), may be used as the inorganic fine particles (D). This is because when using the inorganic fine particles having the treated surfaces, the preservative stability of the photocurable resin composition becomes better, and also, the surface hardness and weatherability of a multilayer sheet described below become good.

SiR¹ₐR²_{b}(OR³)_{c} (I)

(in the above Formula (I), each of R¹ and R² represents a hydrocarbon group having 1 to 10 carbon atoms, which may have an ether bond, an ester bond, an epoxy bond, or a carbon-carbon double bond. R³ represents a hydrogen atom or a hydrocarbon group having 1 to 10 carbon atoms, which may have an ether bond, an ester bond, an epoxy bond, or a carbon-carbon double bond. Each of a and b represents an integer of 0 to 3, and c represents an integer of 1 to 4 that satisfies 4-a-b.)

Among the silane compounds represented by the above Formula (I), the silane compounds represented by the following Formulas (II) to (VII) are more preferred.

SiR⁴ₐR⁵_{b}(OR⁶)_{c} (II)

SiR⁴ₙ(OCH₂CH₂OCO(R⁷)C=CH₂)₄₋ₙ (III)

CH₂=C(R⁷)COO(CH₂)ₚSiR⁸ₙ(OR⁶)₃₋ₙ (IV)

CH₂=CHSiR⁸ₙ(OR⁶)₃₋ₙ (V)

HS(CH₂)ₚSiR⁸ₙ(OR⁶)₃₋ₙ (VI)

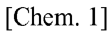

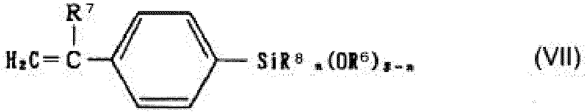

(in the above Formulas (II) to (VII), each of R⁴ and R⁵ represents a hydrocarbon group having 1 to 10 carbon atoms, which may have an ether bond, an ester bond, or an epoxy bond. R⁶ represents a hydrogen atom or a hydrocarbon group having 1 to 10 carbon atoms. R⁷ represents a hydrogen atom or a methyl group. R⁸ represents an alkyl group or phenyl group having 1 to 3 carbon atoms. Each of a and b represents an integer of 0 to 3, c represents an integer of 1 to 4 that satisfies 4-a-b. n represents an integer of 0 to 2. p represents an integer of 1 to 6.)

Examples of the silane compound represented by the above Formula (II) may include tetramethoxysilane, tetraethoxysilane, tetrapropoxysilane, tetrabutoxysilane, methyltrimethoxysilane, methyltriethoxysilane, ethyltrimethoxysilane, ethyltriethoxysilane, phenyltrimethoxysilane, phenyltriethoxysilane, dimethyldimethoxysilane, diphenyldimethoxysilane, methylethyldiethoxysilane, methylphenyldimethoxysilane, trimethylethoxysilane, methoxyethyltriethoxysilane, acetoxyethyltriethoxysilane, diethoxyethyldimethoxysilane, tetraacetoxysilane, methyltriacetoxysilane, tetrakis(2-methoxyethoxy) silane, γ-glycidoxypropyltrimethoxysilane, γ-glycidoxypropylmethyldiethoxysilane, β-(3,4-epoxycyclohexyl) ethyltrimethoxysilane, and the like.

Examples of the silane compound represented by the above Formula (III) may include tetrakis(acryloyloxyethoxy) silane, tetrakis(methacryloyloxyethoxy) silane, methyltris(acryloyloxyethoxy) silane, methyltris(methacryloyloxyethoxy) silane, and the like.

Examples of the silane compound represented by the above Formula (IV) may include β-acryloyloxyethyldimethoxymethylsilane, γ-acryloyloxypropylmethoxydimethylsilane, γ-acryloyloxypropyltrimethoxysilane, β-methacryloyloxyethyldimethoxymethylsilane, γ-methacryloyloxypropyltrimethoxysilane, and the like.

Examples of the silane compound represented by the above Formula (V) may include vinylmethyldimethoxysilane, vinyltrimethoxysilane, vinyltriethoxysilane, and the like.

Examples of the silane compound represented by the above Formula (VI) may include γ-mercaptopropyldimethoxymethylsilane, γ-mercaptopropyltrimethoxysilane, and the like.

Examples of the silane compound represented by the above Formula (VII) may include p-vinylphenylmethyldimethoxysilane, p-vinylphenyltrimethoxysilane, and the like. They may be used either singly or in combination of two or more kinds thereof.

A method of adding the inorganic fine particles (D) to the thermoplastic resin (A) having a radically polymerizable unsaturated group at a side chain is not particularly limited. For example, the method may be arbitrarily selected, and there may be a method including polymerizing a thermoplastic resin (A) having a radically polymerizable unsaturated group at a side chain, in advance, and then, mixing the inorganic fine particles (D), and also, a method including polymerizing the monomers under the condition of mixing the monomer constituting the thermoplastic resin (A) having a radically polymerizable unsaturated group at a side chain and the inorganic fine particles (D).

### Base material sheet

Examples of the base material sheet in the embodiment of the invention may include the sheets using at least one resin selected from thermoplastic resins, for example, an ABS (acrylonitrile/butadiene/styrene copolymer)-based resin, an AS (acrylonitrile/styrene copolymer)-based resin, a vinyl chloride-based resin, a polystyrene-based resin, a polyolefin-based resin, such as, polypropylene, a fluorine-based resin, a cellophane-based resin, a cellulose-based resin, a polyurethane-based resin, a polyamide-based resin, such as, nylon, a polyester-based resin, a polycarbonate-based resin, a polyvinyl alcohol-based resin, an ethylene vinyl alcohol-based resin, a soft acrylic-based resin, and the like, and a laminate of these sheets. Among them, in terms of the followability in a shape of a mold at the time of being insert-molded, the thermoplastic resin sheet having an extensibility of 100% or more at the time of being heated at 100°C is preferred. The thickness of the base material sheet is not particularly limited, but preferably 10 to 500 µm, and more preferably 30 to 250 µm.

In addition, in terms of the adhesion between a photocurable resin composition and a base material sheet, and the weatherability and transparency of the base material sheet, the sheet of a transparent thermoplastic acrylic resin having a crosslinkable rubber component is more preferred as a base material sheet. Examples of the sheet of the transparent thermoplastic acrylic resin having a crosslinkable rubber component may include the sheet of the transparent thermoplastic acrylic resin obtained by extrusion-molding an acrylic resin having a multilayer structure disclosed in JP 9-263614 A. Preferably, the acrylic resin includes a polymer including an acrylic rubber component in an internal layer thereof and a hard component in an outer layer thereof. The acrylic rubber is a rubber obtained by polymerizing alkyl (meth)acrylate or a mixture including 50% by mass or more thereof.

### [Method of preparing rubber-containing polymer (G)]

The acrylic rubber-containing polymer (G) is preferably prepared according to an emulsion polymerization method including a multi-step polymerization process having a step of [1] and a step of [2].
[1] a polymerization process of performing a first step polymerization after supplying a monomer mixture (a) including 20% by mass or more of alkyl acrylate in a polymerization container, and
[2] a polymerization process of performing a final step polymerization after supplying a monomer mixture (b) including 50% by mass or more of alkyl methacrylate in the polymerization container after the first polymerization process.

A method of preparing the latex of the acrylic rubber-containing polymer (G) includes a process of emulsion-polymerizing the monomer mixture (a) and a process of emulsion-polymerizing the monomer mixture (b). A polymerization process having one step or more for emulsion-polymerizing a monomer mixture (c) or the like may be included between the two emulsion-polymerizing processes, if necessary. In addition, before the polymerization of the monomer mixture (a), a process of emulsion-polymerizing a monomer mixture (s) having the Tg of the polymer of 70 to 120°C may be included.

If necessary, various additives, for example, a lubricant, such as, polyethylene wax and paraffin wax, an antifriction composition, such as, silica, spherical alumina and scale alumina, a plasticizer, a stabilizer, and a coloring agent, may be added in a base material sheet.

In addition, for example, when a molded multilayer article described below is used outside, an ultraviolet ray absorbent or a light stabilizer may be added in a base material sheet. As the ultraviolet ray absorbent and the light stabilizer, there may be the ultraviolet ray absorbents and the light stabilizers added in the above-described photocurable resin composition.

### Multilayer sheet

In the embodiment of the invention, as a multilayer sheet, there may be a multilayer sheet that is laminated with a photocurable resin composition layer on a base material sheet. In addition, if necessary, a decorative layer and/or an adhesive layer described below may be laminated on the side of the base material sheet of the multilayer sheet.

In the embodiment of the invention, since the photocurable resin composition layer does not have an adhesive surface, and inhibits the change of the adhesion with the passage of time, when the multilayer sheet is stored in a roll state, the preservative stability is good. In addition, when a decorative layer and an adhesive layer are formed, it is possible to inhibit troubles, and thus, the yield becomes good.

Examples of a method of laminating a photocurable resin composition layer on a base material sheet may include a method of obtaining a multilayer sheet, in which the solution prepared by sufficiently stirring and dissolving a photocurable resin composition in an organic solvent is applied on a base material sheet, and then, the organic solvent is dried.

In addition, when a resin material used for a base material sheet is a polyolefin-based resin and the like, such as polyethylene and polypropylene which have low adhesion with a photocurable resin composition, in order to improve the adhesion between the base material sheet and the photocurable resin composition, it is preferable that a primer composed of a low molecular weight polyolefin is applied on the base material sheet, in advance, or the surface of the base material sheet is activated with a corona discharge, and the like, in advance.

In addition, with the purpose of preventing a decrease in the adhesion between the cured product of a photocurable resin composition and a base material sheet by a volume contraction at the time of photo-curing the photocurable resin composition, a primer layer may be formed between the base material sheet and the photocurable resin composition.

In addition, when the corona discharge is performed, in terms of the adhesion between a photocurable resin composition layer and a base material sheet, the corona discharge treatment is preferably performed just before laminating the photocurable resin composition layer on the base material sheet.

A method of forming a photocurable resin composition layer may be the known coating methods, such as, a knife coat method, a comma coat method, a reverse coat method, and a dip coat method, or the same method as the method of forming a printing layer described below.

### Protective sheet

In the embodiment of the invention, for a multilayer sheet, a protective sheet may be laminated on a photocurable resin composition of the multilayer sheet, if necessary. The protective sheet is effective for a dust proofing on the surface of a photocurable resin composition layer, and also, is effective for preventing scratches on the surface of the photocurable resin composition layer before being cured.

Since a protective sheet comes in contact with a photocurable resin composition layer, and the protective sheet is peeled off before a molded multilayer article is processed, or the protective sheet in a state of being contacted therewith is processed and then peeled off, the protective sheet preferably has a proper adhesion to the photocurable resin composition layer and a good releasing property thereto. A protective sheet may be arbitrarily selected and then used as long as it satisfies the above described conditions. Examples of the protective sheet may include a polyethylene-based film, a polypropylene-based film, and a polyester-based film.

### Decorative layer

In the embodiment of the invention, a decorative layer constituted of at least one kind selected from a printing layer and a deposition layer described below may be laminated on a multilayer sheet, if necessary.

In the embodiment of the invention, the decorative layer is laminated to decorate the surface of a molded multilayer article with a pattern, a letter, and the like. A kind of the decoration may be arbitrarily selected, and examples thereof may include the grain of wood, the grain of stone, the grain of a texture, sandy grain, a geometric pattern, a letter, and a full-scale pattern.

The thickness of the decorative layer may be arbitrarily selected according to the elongation degree when being insert-molded, for example, so as to obtain a surface appearance of a desirable molded multilayer article.

### Printing layer

Examples of the materials used for a printing layer may include a coloring ink including a resin binder and a coloring agent.

Examples of the resin binder may include a polyvinyl-based resin, such as, a vinyl chloride/vinyl acetate-based copolymer, a polyamide-based resin, a polyester-based resin, a polyacrylic-based resin, a polyurethane-based resin, a polyvinyl acetal-based resin, a polyester urethane-based resin, a cellulose ester-based resin, an alkyd resin, and a chlorinated polyolefin-based resin.

A coloring agent may be at least one kind selected from the known dyes and pigments. Examples of the dye may include yellow dyes, for example, an azo-based dye, such as, polyazo, an organic dye, such as, isoindolinone, and an inorganic dye, such as, chrome yellow; red dyes, for example, an azo-based dye, such as, polyazo, an organic dye, such as, quinacridone, and an inorganic dye, such as, red iron oxide; blue dyes, for example, an organic dye, such as, phthalocyanine blue, and an inorganic dye, such as, cobalt blue; black dyes, for example, aniline black; and white dyes, such as, titanium dioxide.

Examples of a method of forming a printing layer may include printing methods such as an offset printing method, a gravure rotary printing method, and a screen printing method, and coat methods such as a roll coat method and a spray coat method.

### Deposition layer

Examples of the material used for a deposition layer may include at least one metal selected from aluminum, nickel, gold, platinum, chrome, iron, copper, indium, tin, silver, titanium, lead, and zinc, or an alloy thereof or metal compound.

Examples of a method of forming a deposition layer may include a vacuum deposition method, a spattering method, an ion plating method, and a plating method.

The printing layer and deposition layer are laminated on a base material sheet of a multilayer sheet.

### Adhesive layer

In the embodiment of the invention, an adhesive layer may be formed, if necessary, in order to improve the adhesion to a multilayer sheet, a decorative layer, a primer sheet described below, or a molded article described below.

As a material used for the adhesive layer, any synthetic resin material may be used as long as it allows the adhesion to a multilayer sheet, a decorative layer, a primer sheet, or a molded article to be improved.

Examples of the material used for an adhesive layer may include a polyacrylic-based resin, when the resin used for a primer sheet or a molded article is a polyacrylic-based resin. In addition, when the resin used for a primer sheet or a molded article is a polyphenylene oxide · polystyrene-based resin, a polycarbonate-based resin, a styrene copolymer-based resin, or a polystyrene-based blend resin, there may be a polyacrylic-based resin, a polystyrene-based resin, or a polyamide-based resin, which has the affinity with these resins. In addition, when the resin used for a primer sheet or a molded article is a polyolefin-based resin, such as, a polypropylene-based resin, there may be a chlorinated polyolefin-based resin, a chlorinated ethylene-vinyl acetate copolymer resin, a cyclized rubber, a coumarone indene-based resin, or a thermosetting urethane-based resin using blocked isocyanate. These resins used for an adhesive layer may be used either singly or in combination of two or more kinds thereof, according to the purpose.

In addition, with the purpose of decreasing the adhesion of an adhesive layer or improving the heat resistance thereof, hydrophobic silica, an epoxy resin, and a petroleum resin may be combined in the adhesive layer, if necessary.

In the embodiment of the invention, a primer sheet may be formed between an adhesive layer and a molded article in order to improve the adhesion between the adhesive layer and the molded article or inhibit the spread of the defect into a cured product layer of a photocurable resin composition on a multilayer sheet by the surface defect of the molded article.

In terms of increasing the adhesion to a molded article, a primer sheet is preferably a sheet using a resin having high compatibility, and more preferably a sheet using a resin material like a molded article.

The thickness of a primer sheet is preferably 30 to 750 µm. When the thickness of the primer sheet is 30 µm or more, there is a tendency that while the thickness of the sheet in a curved surface is not significantly decreased, a deep drawing molding may be performed. In addition, when the thickness of the primer sheet is 750 µm or less, there is a tendency that while the followability to the shape of a mold is not decreased, the molding may be performed.

A method of forming an adhesive layer may be the method of forming a photocurable resin composition layer or the method of forming a printing layer as described above.

### Molded article

In the embodiment of the invention, a molded article is a molded product for forming a molded multilayer article by laminating a multilayer sheet. Examples of the molded article may include a sheet-shaped product or a molded product in a three-dimensional shape.

Examples of the method of forming a sheet-shaped product may include an extrusion molding method or a casting method. In addition, as a method of forming a molded product in a three-dimensional shape, there may be an injection molding method, a blow molding method, a vacuum molding method, an air-pressure molding method, a press molding method by strongly pressing a heated rubber, or a press molding method.

### Molded multilayer article

In the embodiment of the invention, a molded multilayer article may be a molded multilayer article that is laminated so as for the side of a base material sheet of a multilayer sheet to come in contact with a molded article, a molded multilayer article that is laminated so as for the side of a decorative layer of a multilayer sheet to come in contact with a molded article, and a molded multilayer article that is laminated so as for the side of an adhesive layer of a multilayer sheet to come in contact with a molded article.

When the primer sheet is used, there may be a molded multilayer article that is laminated so as for the side of a primer sheet of a multilayer sheet to come in contact with a molded article.

In addition, when a molded multilayer article is in a large shape, such as, a body panel or a spoiler of a vehicle, and the thickness of the molded article is thin, there may be problems in that the gas that is generated from the resin described below is remained in the molded article when the molded article is molded; the air in a mold is easily interposed between the molded article and the multilayer sheet; or the adhesion of the multilayer sheet to the molded article is decreased. In order to solve these problems, a layer having gas permeability between the molded article and multilayer sheet may be provided.

As the layer having gas permeability, there may be a woven fabric or non-woven fabric layer constituted of spandex, an acrylic fiber, a polyethylene-based fiber, and a polyamide-based fiber. In addition, the layer having a foaming layer instead of a woven fabric or non-woven fabric may be used. Examples of the method for forming the foaming layer may include a method of forming continuous holes by foaming through heating, and the like after applying a resin solution including the known foaming agent.

Examples of the use of a molded multilayer article may include other various uses, for example, an automotive interior member, such as, an instrument panel, a console box, a meter cover, a door lock bezel, a steering wheel, a power window switch base, a center cluster, and a dashboard; an automotive exterior member, such as, a weather strip, a bumper, a bumper guard, a side mudguard, a body panel, a spoiler, a front grill, a strut mount, a wheel cap, a center pillar, a door mirror, a center ornament, a side molding, a door molding, a window molding, a window, a head lamp cover, a tail lamp cover, and a shelter belt part; various front panels, such as, an AV apparatus; a surface decorative material, such as, a button and an emblem; various parts, such as, a housing of a cell-phone, a display window, and a button; an exterior material for furniture; an interior material for building, such as, a wall surface, a ceiling, and a floor; an exterior material for furniture, such as, outer walls of a siding, wall, roof, a gate, and a bargeboard; a surface decorative material for furniture, such as, a sash, a door, a handrail, a threshold, and a lintel; optical members, such as, various displays, lens, mirrors, goggles, and windows; interior and exterior members of various vehicles, such as, a subway, a plane, and a ship, other than a car; various package materials, such as, a bottle, a cosmetic container, and an accessories box, miscellaneous goods, such as, a package material, giveaway, and props, and the like.

### Resin constituting molded article

In the embodiment of the invention, the resin constituting a molded article may be all kinds of resins capable of being variously molded, for example, an injection molding.

Examples of the resin constituting a molded article may include a general-purpose thermoplastic resin or thermosetting resin, such as, a polyethylene-based resin, a polypropylene-based resin, a polybutene-based resin, a polymethylpentene-based resin, an ethylene-propylene copolymer-based resin, an ethylene-propylene-butene copolymer-based resin, an olefin-based resin, such as, olefin-based thermoplastic elastomer, a polystyrene-based resin, an ABS (acrylonitrile/butadiene/styrene-based copolymer)-based resin, an AS (acrylonitrile/styrene-based copolymer)-based resin, an acrylic-based resin, an urethane-based resin, an unsaturated polyester-based resin, and an epoxy-based resin; a general-purpose engineering resin, such as, a polyphenylene oxide · polystyrene-based resin, a polycarbonate-based resin, a polyacetal-based resin, a polycarbonate modified polyphenylene ether-based resin, and a polyethylene terephthalate-based resin; and a super engineering resin, such as, a polysulfone-based resin, a polyphenylene sulfide-based resin, a polyphenylene oxide-based resin, a polyetherimide-based resin, a polyimide-based resin, a liquid crystal polyester-based resin, and a polyally-based heat-resistant resin.

In addition, reinforcing agents, for example, a glass fiber, or inorganic fillers, such as, talc, calcium carbonate, silica, and mica, a composite resin that is added with a modifier, such as, a rubber component, and various modified resins may be added in the resins constituting a molded article, according to the purpose.

In addition, it is preferable that there be a tendency that the defects, such as, the warpage of a molded multilayer article or the peeling of a multilayer sheet may be solved by making the contraction rate of the resin constituting a molded article after being molded to be close to the contraction rate of a multilayer sheet.

### Method of preparing molded multilayer article

In the embodiment of the invention, the method of preparing a molded multilayer article may be, for example, the method as follows.

First, the photocurable resin composition layer on a multilayer sheet is inserted and arranged to face the inner wall surface of a mold in a sheet inserting process (1). Subsequently, in a molded article-forming process (3), the mold, in which the multilayer sheet is inserted and arranged, is closed; and a dissolved resin is injected into the mold, and then, is solidified to form the molded article having the multilayer sheet on the surface thereof. Since then, in a photo-curing process (4), the photocurable resin composition on the surface of the molded article is photo-cured by irradiating active energy rays to obtain the molded multilayer article of the invention.

In addition, as other preparing methods, first, in a sheet inserting process (1), a photocurable resin composition layer on a multilayer sheet is inserted and arranged to face the inner wall surface of a mold. Subsequently, in a pre-molding process (2), the multilayer sheet is pre-molded, such that the multilayer sheet is allowed to follow the shape of the mold. Since then, in a molded article-forming process (3), the mold, in which the multilayer sheet is inserted and arranged, is closed; and a dissolved resin is injected into the mold, and then, is solidified to form the molded article having the multilayer sheet on the surface thereof. In addition, in a photo-curing process (4), the photocurable resin composition on the surface of the molded article is photo-cured by irradiating active energy rays to obtain the molded multilayer article of the invention. In addition, in the embodiment of the invention, the photo-curing process (4) may be not provided as long as it does not get out of an object of the invention.

In the embodiment of the invention, when a protective sheet is provided on the surface of a multilayer sheet, it is preferred to use the protective sheet being peeled off from the multilayer sheet. In addition, as the timing of peeling the protective sheet off, any time will suit when it comes to be before the multilayer sheet is inserted and arranged into the mold. However, in terms of the dust proofing or the damage prevention on the surface of the photocurable resin composition layer, it is preferred to peel off the multilayer sheet just before inserting and arranging the multilayer sheet into the mold.

In a sheet inserting process (1), a method of inserting a multilayer sheet for being inserted and arranged may be any method among the method of intermittently sending a necessary part in the state of a long film sheet while winding it from a roll, and the method of making the multilayer sheet to be a single wafer and then sending one sheet. In addition, when using a multilayer sheet laminated with a decorative layer in the shape of a long film sheet as a multilayer sheet, it is preferred to match the aims of the decorative layer and the mold using a feeding device having a positioning apparatus. In addition, when the multilayer sheet is intermittently sent, the sheet can be fixed at the same position all the time by fixing the multilayer sheet after detecting the position of the multilayer sheet with a sensor, and thus, it is convenient since there is no difference between the positions of the decorative layer.

In a pre-molding process (2), as a pre-molding method, for example, there is a method of allowing a sheet to follow the shape of a mold by subjecting the multilayer sheet to a softening to a softening point or more by a heating means, such as, a hot pack, and then, by vacuum-absorbing it through an absorbing hole provided on the mold. In addition, when the multilayer sheet is pre-heated to less than the heat-modified temperature of the multilayer sheet, in advance, before inserting and arranging the multilayer sheet into the mold, the time of heating to be performed after inserting and arranging the multilayer sheet into the mold may be shorten; then, the productivity thereof may be improved; and thus, it is preferred. In addition, in the pre-molding process (2), the multilayer sheet may be pre-molded to have a desired shape, in advance, by the known molding method, such as, a blow molding method, a vacuum molding method, an air-pressure molding method, a press molding method by strongly pressing a heated rubber, or a press molding method, using molds for a three-dimensional process molding other than the mold for an injection molding used in the molded article-forming process (3). In addition, when the present molded article in the molded article-forming process (3) is formed without performing the pre-molding process (2), it is possible to pre-heat the multilayer sheet for the softening, in advance.

In the molded article-forming process (3), the method of forming a molded article may be the same molding method as the pre-molding as described above.

In the embodiment of the invention, a photocurable resin composition layer on the surface of a molded article is photo-cured by irradiating active energy rays on the photocurable resin composition layer in a photo-curing process (4). In addition, the timing of irradiating active energy rays on the photocurable resin composition layer may be any timing among the method of irradiating the obtained molded article that is peeled off from the mold in the molded article-forming process (3) and the method of irradiating the obtained molded article in the state of being remained in the mold in the molded article-forming process (3). In the embodiment of the invention, the active energy rays are not particularly limited as long as a photo-polymerization initiator (C) generates radicals by being irradiated with the active energy rays. The irradiation condition may be arbitrarily set, but the general irradiation energy is about 100 to 10,000 mJ/cm².

In the embodiment of the invention, the multilayer sheet that is formed on the end part of the obtained molded multilayer article or the unnecessary part of the cured product thereof may be properly trimmed and then removed. The timing of being trimmed may be any timing among after inserting and arranging the multilayer sheet into the mold, before irradiating active energy rays on the molded multilayer article, or after irradiating the rays thereof.

A method of trimming unnecessary parts may be, for example, a method of burning the sheet by irradiating a laser beam and then cutting the unnecessary parts, a method of drilling a hole in the sheet by a press processing with the punching die for trimming prepared, and a method of removing the sheet with a human hand.

In the embodiment of the invention, it is possible to obtain the molded multilayer article that is given with a color or a design and is molded at the same time, and it is also possible to obtain the molded multilayer article having a surface with excellent wear resistance by the irradiation for a short period of time. In addition, in compared with a spray painting after being conventionally molded, according to the method of the invention, it is possible to achieve the shortening of a process, the improvement of a yield, and the decrease in an influence on an environment.

In addition, for a molded multilayer article, a multilayer sheet at the time of molding the above-described molded article, and also, as a molded article, the article, which is molded by an injection molding, in advance, may be used; a multilayer sheet is laminated on the surface of the article, directly, or by interposing an adhesive layer between the surface thereof and the multilayer sheet; and then, the multilayer sheet is photo-cured to obtain the molded multilayer article.

### EXAMPLES

Hereinafter, the embodiments of the invention will be described in detail with reference to Examples, but the range of the invention is not limited thereto. In addition, in Examples, "a part" refers to "a part by mass." In addition, in Examples, various measurements and evaluations are performed according to the following methods.

### (1) Polymerization rate

The polymerization rate of the monomers in a thermoplastic resin (A) having a radically polymerizable unsaturated group at a side chain was measured according to the following method. The monomers that were remained in the solution of the thermoplastic resin (A) having a radically polymerizable unsaturated group at a side chain, which was obtained by the polymerization, were analyzed by a gas chromatography (manufactured by Agilent Technologies Inc., Type: HP6890), and then, the polymerization rate (%) was calculated from the remaining amount of the monomers.

### (2) Solid content

The solid content of the thermoplastic resin (A) having a radically polymerizable unsaturated group at a side chain was measured by the following method. About 0.5 g of the solution or dispersion of the thermoplastic resin (A) having a radically polymerizable unsaturated group at a side chain was taken on an aluminum plate, and then, the accurate mass thereof was measured. After volatilizing the solution or dispersion at room temperature, the mass of the transparent solid of the thermoplastic resin (A) having a radically polymerizable unsaturated group at a side chain, which was obtained by heating it at 80°C for 4 hours, was measured, and then, the solid content (% by mass) thereof was calculated.

### (3) Number average molecular weight (Mn)

The Mn of the thermoplastic resin (A) having a radically polymerizable unsaturated group at a side chain was measured using a high-speed GPC device (manufactured by Tosoh Corporation, Type: HLC-8220 GPC). In addition, as a value, the value converted with polystyrene was used.

### (4) Double bond equivalent

For the double bond equivalent of the thermoplastic resin (A) having a radically polymerizable unsaturated group at a side chain, the double bond equivalent (g/mol) was calculated by estimating the structure of the acrylic resin (A) obtained from the polymerization rate of the monomer calculated by the synthetic recipe and above-described method.

### (5) Glass transition temperature (Tg)

The Tg of the thermoplastic resin (A) having a radically polymerizable unsaturated group at a side chain was measured using a differential scanning calorimeter (manufactured by Seiko Instruments Inc., Type: DSC6200).

### (6) Total light transmittance

The total light transmittance (%) was measured using a hazemeter (manufactured by Nippon Denshoku Industries Co., Ltd., Type: NDH2000) based on ASTM D1003.

### (7) Wear resistance

The haze value was measured with a hazemeter (manufactured by Nippon Denshoku Industries Co., Ltd., Type: NDH2000) under the conditions of a revolution speed of 70 rpm, a one side load of 500 g, a suction port height of 1.5 mm, and an examination number of 500 rounds using a Taber wear tester (manufactured by Toyo Seiki Seisaku-sho, Ltd., Product Name: Rotary Abrasion Tester, Type: TS) and Abrasion Wheel (manufactured by Tabor Industries, Product Name: CS-10 F (Type IV)), based on JIS R3212. In addition, the value represented by (Haze value after being tested)-(Haze value before being tested) was defined as wear resistance (%).

### (8) Weatherability

A crack state per 10 cycles, in which, one cycle was defined as 12 hours, including 4 hours for irradiating the illumination at intensity of 90 mW/cm² (63°C, 70%RH), 4 hours for dew condensation (70°C, 90%RH), and 4 hours for darkness (30°C, 98%RH), was estimated with a naked eye based on the following criteria using Metal Weather (manufactured by Daipla Wintes Co., Ltd., Type: KU-R4CI-A, A type of filter: KF-2 filter).
○: The time of generating cracks was delayed as compared with Comparative Example 1.
X: The time of generating cracks was the same or quickened as compared with Comparative Example 1.

### [Synthetic Example 1] Synthesis of thermoplastic resin (A-1) having a radically polymerizable unsaturated group at side chain

80 parts of methyl ethyl ketone as a solvent was added to a 1 L four neck flask having a nitrogen inlet, a stirrer, a capacitor, and a thermometer, and then, the temperature thereof was increased to be 80°C. Subsequently, the flask was changed to be under a nitrogen atmosphere, and then, the monomer mixture (a) of 27.5 parts of methyl ethyl ketone, 86 parts of methyl methacrylate, 21.5 parts of glycidyl methacrylate, and 0.376 part of azobisisobutyronitrile was dropped over 4 hours.

Since then, the mixture of 32.3 parts of methyl ethyl ketone and 0.2 part of azobisisobutyronitrile was dropped over 30 minutes, and then, the polymerization thereof was performed.

After a lapse of 11 hours and 30 minutes from a polymerization initiation, the monomer mixture (b) of 72.5 parts of methyl ethyl ketone, 0.538 parts of hydroquinone monomethyl ether, 2.69 parts of triphenylphosphine, and 10.9 parts of acrylic acid was dropped over 30 minutes, and then, stirred at 80°C for 34 hours and 30 minutes while blowing air therein.

Since then, after cooling inside the flask, the reactant was taken out from the flask to obtain the solution of the thermoplastic resin (A-1) having a radically polymerizable unsaturated group at a side chain.

The polymerization rate of the monomers in the acrylic resin (A-1) was 99.5% or more, the solid content of the acrylic resin (A-1) was about 37% by mass, the Mn was about 25,000, the double bond equivalent was about 782 g/mol, and the Tg was about 96°C.

### [Synthetic Example 2] Synthesis of inorganic fine particle (D-1)

1200 parts of a methanol silica sol solution (manufactured by Nissan Chemical Industries, Ltd., Product Name: MT-ST, Dispersion medium: methanol, SiO₂ concentration: 30% by mass, First particle diameter: 10 to 20 nm) and 230 parts of γ-methacryloxypropyl trimethoxysilane (manufactured by Shin-Etsu Silicone Co., Ltd., Product Name: KBM-503, Molecular weight: 248) as an organic silane compound were added into a 3 L four neck flask having a stirrer, a thermometer, and a capacitor, and then, the temperature thereof was increased while being stirred.

After initiating the reflux of volatile components, the hydrolysis was performed while being stirred for 2 hours under the reflux after adding 33 parts of pure water thereto, and then, the volatile components, such as, alcohol and water was distilled to adjust the solid concentration to be 60% by mass.

Since then, the azeotropic distination was performed while the alcohol and water were stirred with toluene for 3 hours after adding 700 parts of toluene thereto. In addition, in order to completely perform a solvent substitution, while distilling alcohol and toluene, the reaction was performed at 110°C for 4 hours to about 60% by mass of.

### [Example 1]

The solution of the photocurable resin composition having the compositions as listed in Table 1 was prepared. The obtained solution of the photocurable resin composition was applied on a transparent soft acrylic resin sheet (manufactured by Mitsubishi Rayon Co., Ltd., Acryplen HBS010P) having a thickness of 75 µm, including a crosslinkable rubber component as a base material sheet to have a plating width of 300 nm, and then, dried by using a hot air drier to obtain the multilayer sheet, in which the photocurable resin composition layer having a thickness of 5 µm was laminated on the base material sheet. The total light transmittance of the obtained multilayer sheet was estimated. The results are listed in Table 1.

The obtained multilayer sheet was arranged into a mold so as for the photocurable resin composition layer to face the inner wall surface of the mold; then, the multilayer sheet was pre-heated in an infrared light heater of 350°C for 10 seconds; and then, while being again heated at 350°C, the vacuum absorption was performed to allow the multilayer sheet to follow the shape of the mold. In addition, the mold that has a shape of a truncated pyramid, a truncated side size of 100 mm in a height and 100 mm in a width, a bottom side size of 108 mm in a height, 117 mm in a width, and 10 mm in a depth, and the curved radiuses of the ends of the truncated side, which are respectively 3, 5, 7, and 10 mm, may be used as the mold.

An insert-molding was performing using a polycarbonate resin as a resin constituting a molded article under the conditions of a molding temperature of 280 to 300°C and a mold temperature of 40 to 60°C using the mold that was allowed so as for a multilayer sheet to follow the surface of the mold, and then, the obtained insert-molded article was peeled off from the mold to obtain the insert-molded article prepared by laminating the multilayer sheet on the molded article.

The obtained insert-molded article was irradiated with the ultraviolet rays of about 560 mJ/cm² using an ultraviolet ray-irradiating device (manufactured by Eye Graphics Co., Ltd., Product Name: EYE GRANDAGE (Trade Name) (4 kw) ECS-401 GX), and then, a photocurable resin composition was cured to obtain a molded multilayer article prepared by laminating the layer of the cured product of the photocurable resin composition on the base material sheet. The results of estimating wear resistance and weatherability of the cured product layer of the photocurable resin composition on the surface of the molded multilayer article are listed in Table 1.

### [Examples 2 to 8 and Comparative Examples 1 to 4]

The various kinds of estimations are performed in such a manner that a multilayer sheet, an insert-molded article, and a molded multilayer article were obtained in the same method as Example 1, except that the photocurable resin compositions listed in Table 1 were used instead of the photocurable resin composition. The estimation results are listed in Table 1.

**[Table 1]**

| | | | Example | | | | | | | | Comparative Example | | | |
|---|---|---|---|---|---|---|---|---|---|---|---|---|---|---|
| | | | 1 | 2 | 3 | 4 | 5 | 6 | 7 | 8 | 1 | 2 | 3 | 4 |
| Photocurable resin composition (Solid conversion) (Part) | Thermoplastic resin (A) having radically polymerizable unsaturated group at side chain | (A-1) | 100 | 100 | 100 | 100 | 100 | 100 | 100 | 100 | 100 | 100 | 100 | 100 |
| | High molecular weight hindered amine-based light stabilizer (B) | (B-1) | 2.5 | 2.5 | | | | | | | | | | |
| | | (B-2) | | | 2.5 | | | | | | | | | |
| | | (B-3) | | | | 1.6 | 2.5 | 3.3 | 4.1 | | | | | |
| | | (B-4) | | | | | | | | 2.5 | | | | |
| | Photo-polymerization initiator (C) | (C-1) | 3.2 | 3.2 | 3.2 | 3.2 | 3.2 | 3.2 | 3.2 | 3.2 | 3.2 | 3.2 | 3.2 | 3.2 |
| | Inorganic fine particles (D) | (D-1) | 119 | 119 | 119 | 119 | 119 | 119 | 119 | 119 | 119 | 119 | 119 | 119 |
| | Low molecular weight hindered amine-based light stabilizer (E) | (E-1) | | 0.8 | 0.8 | 0.8 | 0.8 | 0.8 | 0.8 | 0.8 | | 0.8 | 2.5 | |
| | | (E-2) | | | | | | | | | | | | 2.5 |
| Evaluation results | Total light transmittance (%) | | 90 | 91 | 90 | 90 | 90 | 90 | 90 | 90 | 90 | 90 | 91 | 90 |
| | Difference of haze values before and after testing (%) | | 6 | 6 | 6 | 5 | 5 | 5 | 5 | 5 | 6 | 6 | 9 | 8 |
| | Weatherability | | ○ | ○ | ○ | ○ | ○ | ○ | ○ | ○ | - | × | ○ | ○ |

### The compounds listed in Table are as follows.

High molecular weight hindered amine-based light stabilizer (B-1): a polycondensate of dimethyl succinate and 4-hydroxy-2,2,6,6-tetramethyl-1-piperidineethanol (Product Name: Tinuvin (Trade Mark) 622 SF, Molecular weight: 3,100 to 4,000, manufactured by BASF Japan Ltd.)

High molecular weight hindered amine-based light stabilizer (B-2): an olefin (C20-C24) · maleic anhydride · 4-amino-2,2,6,6-tetramethylpiperidin copolymer (Product Name: Uvinul (Trade Mark) 5050 H, Molecular weight: 3,000 to 4000, manufactured by BASF Japan Ltd.)

High molecular weight hindered amine-based light stabilizer (B-3): a dibutylamine · 1,3,5-triazine · N,N'-bis(2,2,6,6-tetramethyl-4-piperidyl-1,6-hexamethylenediamine and N-(2,2,6,6-tetramethyl-4-piperidyl) butylamine polycondensate (Product Name: Chimassorb (Trade Mark) 2020 FDL, Molecular weight: 2,600 to 3,400, manufactured by BASF Japan Ltd.)

High molecular weight hindered amine-based light stabilizer (B-4): pole[{6-(1,1,3,3-tetramethyl butyl) amino-1,3,5-triazine 2,4-diyl} {(2,2,6,6-tetramethyl-4-piperidyl)imino} hexamethylene {(2,2,6,6-tetramethyl-4-piperidyl)imino}] (Product Name: Chimassorb (Trade Mark) 944 FDL, Molecular weight: 2,000 to 3,100, manufactured by BASF Japan Ltd.)

Photo-polymerization initiator (C-1): 1-hydroxy-cyclohexyl-phenyl-ketone (Product Name: Irgacure 184, Molecular weight: 204.3, manufactured by BASF Japan Ltd.)

Low molecular weight hindered amine-based light stabilizer (E-1): a reaction product of decane diacid bis(2,2,6,6-tetramethyl-1-octyloxy-4-piperidinyl)ester, 1,1-dimethylethylhydroperoxide, and octane (Product Name: Tinuvin (Trade Mark) 123, Molecular weight: 737, manufactured by BASF Japan Ltd.)

Low molecular weight hindered amine-based light stabilizer (E-2): a mixture of bis(1,2,2,6,6-pentamethyl-4-piperidyl) sebacate and methyl 1,2,2,6,6-pentamethyl-4-piperidylsebacate (Product Name: TINUVIN (Trade Mark) 765, Molecular weight: 509, manufactured by BASF Japan Ltd.)

Examples 1 to 8 had a high molecular weight hindered amine-based light stabilizer (B). In addition, the content of the high molecular weight hindered amine-based light stabilizer (B) with respect to the content of inorganic fine particles (D) was within the preferred range. For this reason, all the physical properties including wear resistance and weatherability were good. In addition, Examples 4 to 8 including a high molecular weight hindered amine-based light stabilizer (B) having a triazine backbone as a high molecular weight hindered amine-based light stabilizer (B) had better wear resistance.

Comparative Examples 1 and 2 did not include a high molecular weight hindered amine-based light stabilizer (B), and also, the content of the low molecular weight hindered amine-based light stabilizer (E), except (B), with respect to the content of the inorganic fine particle (D) was not within the preferred range. For this reason, weatherability was not good.

Comparative Examples 3 and 4 did not include a high molecular weight hindered amine-based light stabilizer (B), and also, the content of the low molecular weight hindered amine-based light stabilizer (E), except (B), with respect to the content of the inorganic fine particle (D) was within the preferred range. For this reason, weatherability was good, but wear resistance was decreased.

### INDUSTRIAL APPLICABILITY

As described above, in the embodiments of the invention, the cured product of the resin composition is very excellent, and thus, the molded multilayer article that can be obtained by using a multilayer sheet laminated with a photocurable resin composition can be used for many uses, for example, automotive members, such as, an automotive interior member and an automotive exterior member, building materials, such as, an interior material for building and an exterior material for building, various surface decorative materials, and optical members.

## Claims

1. A photocurable resin composition for a surface protective layer of a multilayer sheet, the photocurable resin composition comprising a thermoplastic resin (A) having a radically polymerizable unsaturated group at a side chain thereof, a high molecular weight hindered amine-based light stabilizer (B) having a number average molecular weight of 1,000 to 50,000, and a photo-polymerization initiator (C).

2. The photocurable resin composition according to claim 1, wherein a difference of haze values before and after a wear resistance test (based on JIS R3212) of the photocurable resin composition after being cured is 7% or less.

3. The photocurable resin composition according to claim 1 or 2, wherein the high molecular weight hindered amine-based light stabilizer (B) has a triazine backbone.

4. The photocurable resin composition according to any one of claims 1 to 3, wherein the photocurable resin composition further includes inorganic fine particles (D).

5. The photocurable resin composition according to claim 4, wherein the inorganic fine particles (D) are colloidal silica.

6. The photocurable resin composition according to claim 4 or 5, wherein the amount of the inorganic fine particles (D) is 5 to 400 parts by mass with respect to 100 parts by mass of the thermoplastic resin (A) having a radically polymerizable unsaturated group at a side chain.

7. The photocurable resin composition according to claim 6, wherein the amount of the inorganic fine particles (D) is 100 to 200 parts by mass and the amount of the high molecular weight hindered amine-based light stabilizer (B) is 2 to 5 parts by mass, with respect to 100 parts by mass of the thermoplastic resin (A) having a radically polymerizable unsaturated group at a side chain.

8. The photocurable resin composition according to any one of claims 1 to 7, wherein the radically polymerizable unsaturated group is a (meth)acryloyl group.

9. The photocurable resin composition according to any one of claims 1 to 8, wherein the thermoplastic resin (A) having a radically polymerizable unsaturated group at a side chain thereof is a thermoplastic resin prepared by adding a compound having a carboxyl group and a (meth)acryloyl group to a copolymer of (meth)acrylate having an epoxy group and a monomer capable of being copolymerized with the (meth)acrylate.

10. The photocurable resin composition according to any one of claims 1 to 9, wherein the photocurable resin composition is a photocurable resin composition that does not substantially have an organic compound having a radically polymerizable unsaturated group, other than the thermoplastic resin (A) having a radically polymerizable unsaturated group at a side chain.

11. A multilayer sheet prepared by laminating the photocurable resin composition according to any one of claims 1 to 10 on a base material sheet to be a thickness of 1 to 15 µm.

12. The multilayer sheet according to claim 11, wherein the base material sheet is a thermoplastic acrylic resin sheet or a polyester-based resin sheet, each of which has a crosslinkable rubber component.

13. A molded multilayer article prepared by laminating a cured product of the multilayer sheet according to claim 11 or 12 on a molded article, wherein the layer laminated with a photocurable resin composition of the multilayer sheet is laminated to be an outermost layer.

14. The molded multilayer article according to claim 13, wherein a difference between haze values before and after a wear resistance test (based on JIS R3212) of the cured product is 7% or less.
